# EUROPÄISCHE PATENTSCHRIFT

(11) **EP 1 665 484 B1**
(45) Veröffentlichungstag und Bekanntmachung des Hinweises auf die Patenterteilung: **20.04.2016**
(21) Anmeldenummer: 04765484.3
(22) Anmeldetag: 22.09.2004
(51) Int. Cl.: H02B 1/20

(54) **ELEKTRISCHE SCHALTEINRICHTUNG UND VERFAHREN ZUM BETREIBEN EINER ELEKTRISCHEN SCHALTEINRICHTUNG**
ELECTRICAL SWITCHING DEVICE, AND METHOD FOR OPERATING AN ELECTRICAL SWITCHING DEVICE
DISPOSITIF DE COMMUTATION ELECTRIQUE, ET PROCEDE POUR FAIRE FONCTIONNER UN DISPOSITIF DE COMMUTATION ELECTRIQUE

(30) Priorität: 22.09.2003 DE 10344187
(43) Veröffentlichungstag der Anmeldung: 07.06.2006
(73) Patentinhaber: Siemens Aktiengesellschaft, 80333 München (DE)
(72) Erfinder: SCHULDT, Andreas, 91052 Erlangen (DE); WENGLER, Peter, 91058 Erlangen (DE); AHLF, Gerd, 91369 Wiesenthau (DE); KITZEL, Hans-Peter, 90427 Nürnberg (DE)
(86) Internationale Anmeldenummer: PCT/EP2004/010614
(87) Internationale Veröffentlichungsnummer: WO 2005/031932

(56) Entgegenhaltungen:
- EP-A- 1 172 908
- DE-A- 19 713 679
- US-A- 5 544 035

## Beschreibung

Die Erfindung betrifft eine elektrische Schalteinrichtung gemäß Oberbegriff des Patentanspruchs 1 sowie ein Verfahren zum Betreiben einer elektrischen Schalteinrichtung gemäß Oberbegriff des Patentanspruchs 6. Eine derartige elektrische Schalteinrichtung ist z.B. durch die DE 33 06 530 A1 bekannt.

Elektrische Schalteinrichtungen dienen in Energieversorgungsanlagen zur Verteilung elektrischer Energie von Energieerzeugern, wie z.B. Generatoren oder Batterien, zu Energieverbrauchern, wie z.B. Motoren. Aus der DE 33 06 530 A1 ist eine als Schalttafel ausgebildete elektrische Schalteinrichtung zur Verteilung elektrischer Energie auf Schiffen oder ortsfesten Anlagen bekannt. Derartige Schalttafeln enthalten auf engem Raum oft eine Vielzahl von Schaltgeräten, die über Sammelschienensysteme miteinander elektrisch verbunden sind.

Bei einem solchen Sammelschienensystem kann es sich im einfachsten Fall um zweipolige Sammelschienen, d.h. zwei im wesentlichen parallel geführte Metallschienen, von denen eine den Hinstrom und die andere den Rückstrom trägt, handeln. Es sind aber auch komplizierter ausgestaltete Sammelschienensysteme bekannt, so z.B. aus der EP 1 154 535 A2 ein Sammelschienensystem mit einem im Wesentlichen röhrenförmigen Außenleiter und einem im Wesentlichen koaxial zu diesem angeordnete Innenleiter.

Die Schaltgeräte sind hierbei jeweils über ein Verbindungsleitersystem mit einem der Sammelschienensysteme verbunden. Die Energieerzeuger und die Energieverbraucher sind jeweils über ein Anschlussleitersystem an ein Schaltgerät anschließbar. Das Verbindungsleitersystem bzw. das Anschlussleitersystem kann im einfachsten Fall ebenfalls als zweipoliges Schienensystem mit zwei im wesentlichen parallel zueinander verlaufenden Metallschienen, d.h. eine Metallschiene für den Hin- und eine Metallschiene für den Rückstrom, ausgebildet sein. Es kann aber auch in Form zweier flexibler Leiter, d.h. ein Leiter für den Hinstrom und ein Leiter für den Rückstrom, vorliegen. Es sind auch kompliziertere Leitersysteme wie z.B. mehrpolige Leitersysteme möglich. Bei den Schaltgeräten handelt es sich meist um Leistungsschalter.

Die erwähnten Schalteinrichtungen können bei hohen Stromflüssen, wie sie z.B. in Energieversorgung- und Verteilungsnetzen von Über- und Unterwasserschiffen mit Betriebsströmen für den Antrieb von mehreren 1000A vorliegen, beträchtliche magnetische Streufelder erzeugen können. In vielen Anwendungsfällen, und hierbei insbesondere in modernen Über- und Unterwasserschiffen, bestehen deshalb besondere Anforderungen hinsichtlich der magnetischen Streufelder und bestimmte Grenzwerte dürfen nicht überschritten werden.

Zum einen soll damit eine Störung empfindlicher Bordelektronik durch magnetische Streufelder vermieden werden. Zum anderen soll aber auch die Möglichkeit einer Detektion des Schiffes anhand seines Magnetfeldes durch entsprechende Ortungsanlagen reduziert werden. Im Fall eines Unterwasserschiffes sollen vor allem ab einer Entfernung von 10 - 15 m vom Unterwasserschiff die Magnetfelder möglichst klein sein. Aufgrund fortlaufender Verbesserungen in der Sensorik von Ortungsanlagen steigen fortwährend die Anforderungen an die Streufeldarmut. Gleichzeitig werden aufgrund steigender Antriebsleistungen in modernen Über- und Unterwasserschiffen die durch die Schalteinrichtungen fließenden Ströme und somit die erzeugten Streufelder immer größer.

Eine erste, naheliegende Abhilfemaßnahme besteht darin, durch geeignete Schirmungen die Magnetfelder zu verringern.

Eine zweite Möglichkeit zur Verringerung von Streufeldern besteht darin, soweit wie möglich nur amagnetische Materialien zu verwenden. So ist z.B. aus der EP 1 154 535 A2 ein Schalttafelgerüst bekannt, bei dem amagnetische Gerüstmaterialien verwendet werden.

Weiterhin ist aus der EP 1 154 535 A2 ein Sammelschienensystem zur elektrischen Leistungsübertragung in magnetisch streufeldarmer Ausführung bekannt.

EP 1 172 908 A2 beschreibt eine Anordnung von stromschienenartigen Leitern bei im Bereich ihrer Verbindung, um die Induktivität in dem Bereich ihrer Verbindung zu vermindern.

US 5,544,035 betrifft eine Umrichterschaltung mit einer geringen Induktivität, wobei sich die geringe Induktivität aus einer speziellen Anordnung von Bauteilen und Verbindern ergibt.

DE 197 13 679 A1 betrifft eine Niederspannungs-Verteilanordnung, welche eine Schienenanordnung mit Stromeinspeisung und Sicherungs- und/oder Kabelabgängen umfasst.

All diese Lösungen sind aufgrund der Art der Konstruktion, der zusätzlich notwendigen Komponenten und/oder der verwendeten Materialen allerdings sehr kostenintensiv und benötigen zusätzlichen Raum, der gerade auf Schiffen sehr knapp ist.

Es ist deshalb Aufgabe vorliegender Erfindung, ausgehend von dem eingangs genannten Stand der Technik eine elektrische Schalteinrichtung und ein Verfahren zum Betreiben einer elektrischen Schalteinrichtung anzugeben, die es erlauben, mit geringem Kostenaufwand und ohne wesentlichen zusätzlichen Raumbedarf die magnetischen Streufelder zu reduzieren.

Die Lösung der auf die Schalteinrichtung gerichteten Aufgabe gelingt erfindungsgemäß durch eine Schalteinrichtung gemäß Patentanspruch 1. Eine besonders vorteilhafte Verwendung der erfindungsgemäßen Schalteinrichtung ist Gegenstand des Patentanspruchs 5. Die Lösung der auf das Verfahren gerichteten Aufgabe gelingt erfindungsgemäß durch ein Verfahren gemäß Patentanspruch 6. Vorteilhafte Ausgestaltungen der Schalteinrichtung bzw. des Verfahrens sind jeweils Gegenstand der Unteransprüche.

Die erfindungsgemäße Schalteinrichtung sieht vor, dass zumindest zwei der Sammelschienensysteme derart in der Schalteinrichtung angeordnet und mit Strom beaufschlagbar sind, dass sich die von den zumindest zwei Sammelschienensysteme erzeugten magnetischen Felder im wesentlichen gegenseitig kompensieren.

Bei der erfindungsgemäßen Schalteinrichtung wird eine Reduzierung der magnetischen Felder somit durch die Anordnung, d.h. die Positionierung und Ausrichtung der Sammelschienensysteme in der Schalteinrichtung und deren Strombeaufschlagbarkeit erzielt. Da darüber hinaus keine weiteren zusätzlichen Komponenten benötigt werden, kann die Reduzierung der Magnetfelder ohne zusätzlichen Raumbedarf und mit geringem Kostenaufwand erfolgen. Da die Sammelschienensysteme im Betrieb der Schalteinrichtung im Normalfall die größten Ströme tragen, werden durch diese auch die größten Magnetfelder erzeugt. Durch eine Reduzierung gerade dieser Magnetfelder kann das von der gesamten Schalteinrichtung erzeugte Magnetfeld am effektivsten verringert werden.

Gemäß der Erfindung sind die zumindest zwei Sammelschienensysteme spiegelsymmetrisch zu einer Symmetrieebene in der Schalteinrichtung angeordnet. Die Kompensation der Magnetfelder kann dann auf einfache Weise dadurch erzielt werden, dass die spiegelsymmetrisch zueinander angeordneten Sammelschienensysteme mit einem gleich großen, aber entgegengesetzt gerichteten Strom beaufschlagt werden.

Die Magnetfelder können dann noch weiter reduziert werden, wenn zumindest zwei der Schaltgeräte über jeweils ein Verbindungsleitersystem mit einem der zumindest zwei Sammelschienensysteme verbunden sind, wobei die Verbindungsleitersysteme spiegelsymmetrisch zu einer Symmetrieebene in der Schalteinrichtung angeordnet sind.

Wenn die beiden spiegelsymmetrisch zueinander angeordneten Verbindungsleitersysteme mit einem gleich großen, aber entgegengesetzt gerichteten Strom beaufschlagt werden, kompensieren sich die von diesen Verbindungsleitersystemen erzeugten Magnetfelder.

Eine weitergehende Reduzierung der Magnetfelder ist möglich, wenn zumindest zwei der Schaltgeräte über jeweils ein Anschlussleitersystem mit einem der Energieerzeuger oder einem der Energieverbraucher verbindbar sind, wobei die Anschlussleitersysteme spiegelsymmetrisch zu einer Symmetrieebene in der Schalteinrichtung angeordnet sind. Wenn die spiegelsymmetrisch zueinander angeordneten Anschlussleitersysteme mit einem gleich großen, aber entgegengesetzt gerichteten Strom beaufschlagt werden, kompensieren sich die von diesen Anschlussleitersystemen erzeugten Magnetfelder.

Das erfindungsgemäße Verfahren sieht vor, dass zumindest zwei der Sammelschienensysteme derart mit Strom beaufschlagt werden, dass sich die von dem Strom in den zumindest zwei Sammelschienensystemen erzeugten magnetischen Felder im Wesentlichen gegenseitig kompensieren. Das von der Schalteinrichtung erzeugte Magnetfeld wird somit durch eine geeignete Einstellung der Ströme in den zumindest zwei Sammelschienensystemen reduziert. Da darüber hinaus keine weiteren zusätzlichen Komponenten benötigt werden, kann die Reduzierung der Magnetfelder ohne zusätzlichen Raumbedarf und mit geringem Kostenaufwand erfolgen.

Die erfindungsgemäße elektrische Schalteinrichtung und das erfindungsgemäße Verfahren eignen sich aufgrund der Möglichkeit zur wirkungsvollen Reduzierung der Magnetfelder bei gleichzeitig geringen Platzanforderungen besonders zur Verwendung in Über- oder Unterwasserschiffen.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigen:
- FIG 1: einen Schienenplan einer Hauptschalttafel eines Unterwasserschiffes,
- FIG 2: eine Detailansicht zweier Schaltungsteile der Hauptschalttafel von FIG 2,
- FIG 3: eine Draufsicht auf die Sammelschienensysteme der FIG 2,
- FIG 4: eine Darstellung der von den zwei Schaltungsteilen der FIG 2 erzeugten magnetischen Felder

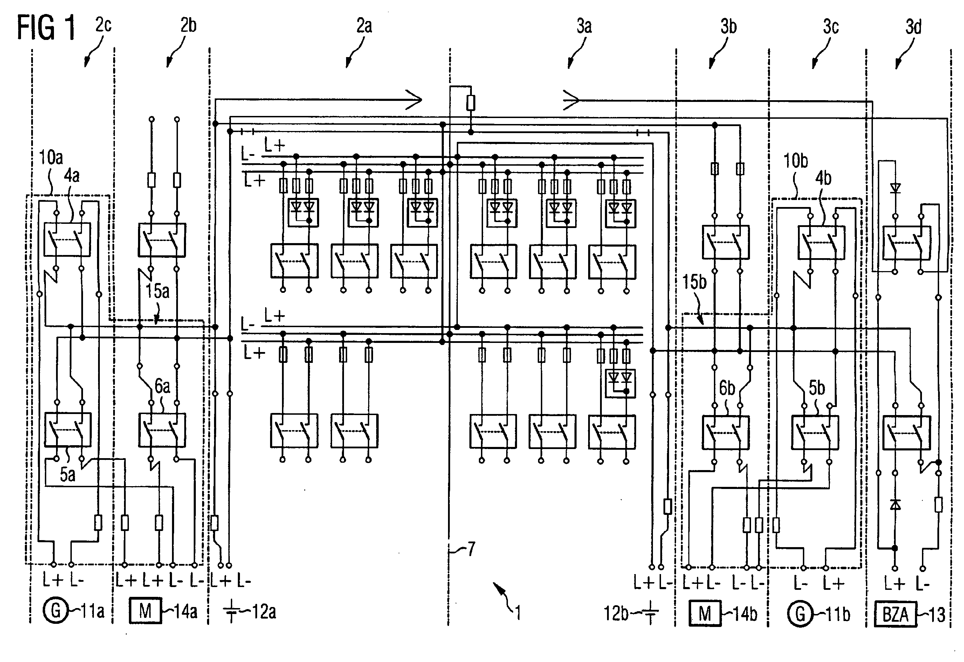

FIG 1 zeigt in vereinfachter Darstellung einen Schienenplan einer elektrische Schalteinrichtung 1 zur Verteilung elektrische Energie von Energieerzeugern 11a, 12a und 11b, 12b, 13 zu Energieverbrauchern 14a und 14b in einem Unterwasserschiff. Bei der elektrischen Schalteinrichtung 1 handelt es sich um die Hauptschalttafel des Unterwasserschiffes. Die Schalteinrichtung 1 weist mehrere Schaltfelder 2a bis 2c und 3a bis 3d auf. Bei den Schaltfeldern 2c und 3c handelt es sich um Generatorschaltfelder, bei den Schaltfeldern 2b und 3b um Motorschaltfelder und bei den Schaltfeldern 2a und 3a um Batterie- und Hilfsgetriebeschaltfelder. Zusätzlich ist ein Brennstoffzellen-Schaltfeld 3d vorgesehen. Die Schalteinrichtung hat eine Breite von ca. 4m, eine Höhe von ca. 2 m und eine Tiefe von ca. 1 m.

Die Verteilung der elektrischen Energie für die Antriebskomponenten des Unterwasserschiffes, d.h. die Motoren 14a und 14b, erfolgt über Sammelschienensysteme 15a bzw. 15b. Das Sammelschienensystem 15a dient zur Übertragung elektrischer Energie von dem Generator 11a oder der Batterie 12a zu dem Motor 14a und das Sammelschienensystem 15b zur Übertragung elektrischer Energie von dem Generator 11b oder der Batterie 12b zu dem Motor 14b.

Mit Hilfe der Schaltgeräte 4a, 4b können die Generatoren 11a bzw. 11b und mit Hilfe der Schaltgeräte 5a, 5b, 6a, 6b die Motoren 14a bzw. 14 auf die Sammelschienensysteme 15a bzw. 15b geschaltet bzw. von ihnen getrennt werden.

Bei den Schaltgeräten 4a, 4b, 5a, 5b, 6a, 6b handelt es sich bevorzugt um Leistungsschalter.

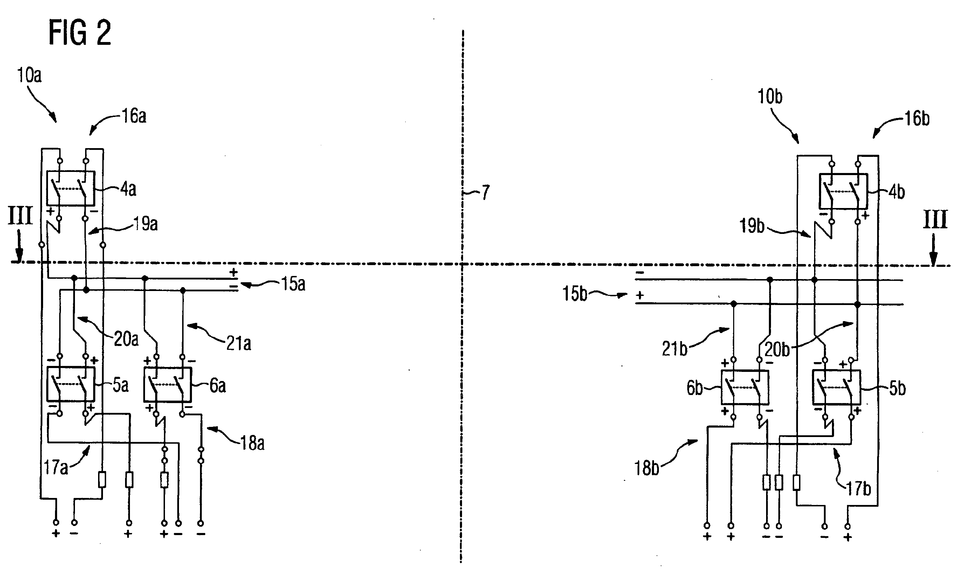

Die Sammelschienensysteme 15a, 15b sind - wie im Detail im Zusammenhang mit FIG 2 - 4 erläutert - derart in der Schalteinrichtung 1 angeordnet und mit einem Strom I beaufschlagbar, dass sich die von den beiden Sammelschienensystemen 15a, 15b erzeugten magnetischen Felder im wesentlichen gegenseitig kompensieren.

Hierbei liegt die Erkenntnis zugrunde, dass in dem Unterwasserschiff die Sammelschienensysteme 15a, 15b in 95% der Betriebsfälle große Ströme von über 1000A führen. Die Versorgung der Hilfsbetriebe erfolgt dagegen mit vergleichsweise kleineren Strömen. Außerdem unterliegt die Versorgung der Hilfsbetriebe einer größeren Varianz, da die Hilfsbetriebe mit größerer Häufigkeit je nach Bedarf zu- oder weggeschaltet werden. Maßnahmen zur Reduzierung der von der Schalteinrichtung 1 erzeugten Magnetfelder setzen deshalb bevorzugt bei den Sammelschienensystemen 15a, 15b an.

FIG 2 zeigt eine Detailansicht der Schaltungsteile 10a und 10b der FIG 1. Die Schaltgeräte und Stromleiter des Schaltungsteils 10a sind in den Bezugszeichen mit einem Index a, die Schaltgeräte und Stromleiter des Schaltungsteils 10b mit einem Index b gekennzeichnet.

Das Schaltungsteil 10a umfasst die Schaltgeräte 4a, 5a und 6a. Das Schaltgerät 4a ist hierbei über ein Verbindungsleitersystem 19a mit dem Sammelschienensystem 15a verbunden. Zum anderen ist das Schaltgerät 4a über ein Anschlussleitersystem 16a mit dem Generator 11a verbindbar. Das Schaltgerät 5a ist über ein Verbindungsleitersystem 20a mit dem Sammelschienensystem 15a verbunden und über ein Anschlussleitersystem 17a mit dem Motor 14a verbindbar und das Schaltgerät 6a ist über ein Verbindungsleitersystem 21a mit dem Sammelschienensystem 15a verbunden und über ein Anschlussleitersystem 18a mit dem Motor 14a verbindbar.

In entsprechender Weise umfasst das Schaltungsteil 10b die Schaltgeräten 4b, 5b und 6b. Auch hier sind die Schaltgeräte 4b, 5b, 6b jeweils über ein Verbindungsleitersystem 19b bzw. 20b bzw. 21b mit dem Sammelschienensystem 15b verbunden und über ein Anschlussleitersystem 16b bzw. 17b bzw. 18b mit dem Generator 11b bzw. dem Motor 14b verbindbar.

In den FIG 1, 2 und 4 ist durch einen kleinen Knick in einer Schienen- oder Leitungsbahn angezeigt, wenn eine von zwei Schienen oder eine von zwei Leitungen eines Verbindungsleiter- oder Anschlussleitersystems tiefer als die andere in der Schalttafel angeordnet ist.

Die Verbindungsleitersysteme und Anschlussleitersysteme können in einfachster Ausführung lediglich aus einem Hin- und einen Rückleiter bestehen, z.B. aus zwei im Wesentlichen parallel geführte Metallschienen oder flexiblen Leitungen. Es sind aber auch komplexere Leitersysteme wie z.B. dreipolige oder Quadropol-Leitersysteme in Schienen oder Kabelausführung möglich.

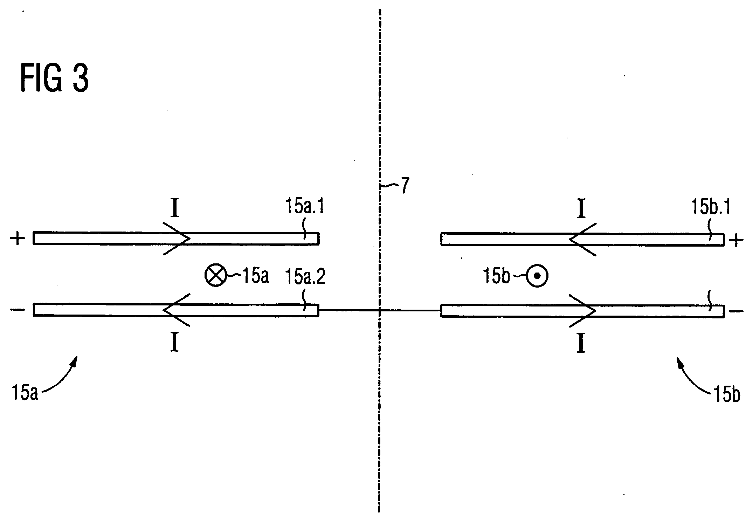

Die beiden Sammelschienensysteme 15a und 15b bestehen - wie in der Draufsicht der FIG 3 dargestellt - jeweils aus zwei Metallschienen 15a.1, 15a.2 bzw. 15b.1, 15b.2, von denen jeweils eine als Hinleiter (+) und die andere als Rückleiter fungiert (-). Die beiden Metallschienen der Sammelschienensysteme 15a und 15b sind hierbei aus der Sicht von FIG 1 - wie insbesondere aus einer Zusammenschau der FIG 1 mit der FIG 3 hervorgeht- räumlich hintereinander in der Schalteinrichtung 1 angeordnet. Zur besseren Übersichtlichkeit sind in FIG 3 an den Metallschienen angeschlossene Komponenten und deren Anschlusspunkte nicht dargestellt.

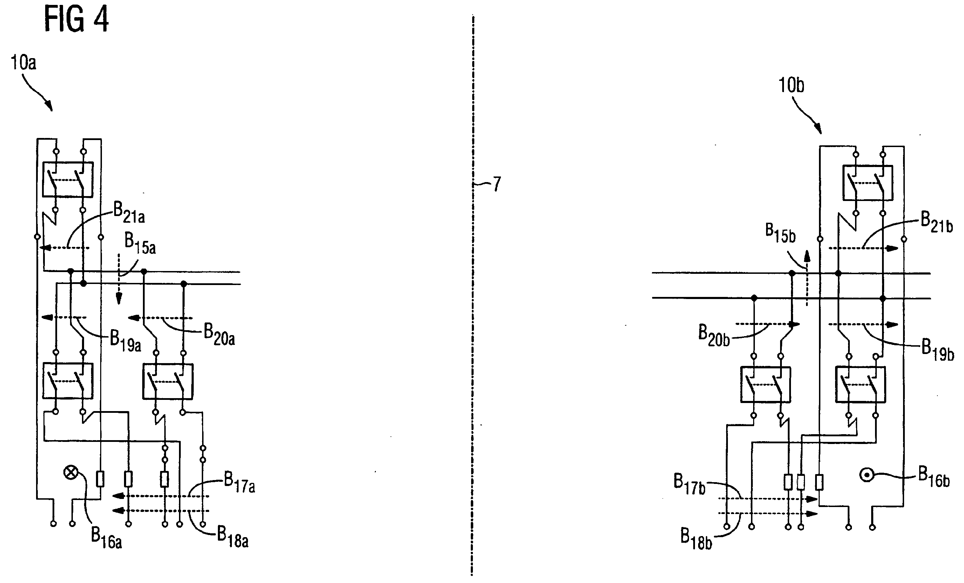

Die Sammelschienensysteme 15a und 15b sind spiegelsymmetrisch zu der Symmetrieebene 7 in der Schalteinrichtung positioniert und ausgerichtet. Wenn die beiden Sammelschienensysteme 15a und 15b jeweils mit einem gleich großen aber entgegengesetzt gerichteten Strom I beaufschlagt werden, sind die von den beiden Sammelschienensysteme 15a und 15b erzeugten Magnetfelder B15a und B15b - wie in FIG 4 dargestellt - gleich groß, aber entgegengesetzt gerichtet, so dass sie sich im wesentlichen gegenseitig kompensieren.

Darüber hinaus sind die Schaltgeräte 4a und 4b mit den zugehörigen Verbindungsleitersystemen 19a bzw.19b und Anschlussleitersystemen 16a bzw. 16b spiegelsymmetrisch zu der Symmetrieebene 7 in der Schalteinrichtung 1 angeordnet.

Wenn die beiden Verbindungsleitersystemen 19a bzw.19b jeweils mit einem gleich großen aber entgegengesetzt gerichteten Strom beaufschlagt werden, sind die von den Verbindungsleitersystemen 19a bzw.19b erzeugten Magnetfelder B19a und B19b - wie in FIG 4 dargestellt - gleich groß, aber entgegengesetzt gerichtet, so dass sie sich gegenseitig kompensieren.

In entsprechender Weise sind die von den Anschlussleitersysteme 16a bzw. 16b erzeugten Magnetfelder B16a und B16b - wie in FIG 4 dargestellt - gleich groß, aber entgegengesetzt gerichtet, wenn sie mit einem gleich großen aber entgegengesetzt gerichteten Strom I beaufschlagt werden.

Auch die Schaltgeräte 5a und 5b sind mit ihren zugehörigen Verbindungsleitersystemen 20a bzw. 20b und Anschlussleitersystemen 17a bzw. 17b spiegelsymmetrisch zu der Symmetrieebene 7 in der Schalteinrichtung 1 angeordnet. Wenn die beiden Verbindungsleitersysteme 20a und 20b mit einem gleich großen aber entgegengesetzt gerichteten Strom I beaufschlagt werden, sind die von den Verbindungsleitersystemen 20a bzw.20b erzeugten Magnetfelder B20a und B20b - wie in FIG 4 dargestellt - gleich groß, aber entgegengesetzt gerichtet, so dass sie sich kompensieren. Entsprechendes gilt für die Anschlussleitersysteme 17a und 17b.

Auch die Schaltgeräte 6a, 6b sind mit ihren zugehörigen Verbindungsleitersystemen 21a bzw. 21b und Anschlussleitersystemen 18a bzw. 18b spiegelsymmetrisch zu der Symmetrieebene 7 in der Schalteinrichtung 1 angeordnet, so dass sich deren Magnetfelder B21a und B21b bzw. B18a und B18b bei entsprechender Stromeinstellung gegenseitig kompensieren.

Bei einer Schalttafel mit den vorstehend erwähnten Abmessungen und Strömen ist durch diese Maßnahmen in einem Abstand von 10 -15 m von dem Unterwasserschiff eine deutliche Reduzierung der magnetischen Streufelder messbar.

Übergreifend gesehen werden aufgrund der spiegelsymmetrischen Anordnung der Schaltungsteile 10a und 10b in Bezug auf die Symmetrieebene 7 die durch den Schaltungsteil 10a erzeugten Magnetfelder durch die von dem Schaltungsteil 10b erzeugten Magnetfelder kompensiert, wenn in den jeweils spiegelsymmetrisch zueinander angeordneten Leitern der beiden Schaltungsteile jeweils gleich große aber entgegengesetzt gerichtete Ströme verlaufen.

Eine maximale Reduzierung der Magnetfelder ist dann möglich, wenn die gesamte Schalteinrichtung einen spiegelsymmetrischen Aufbau hat, d.h. wenn es zu jedem Leitersystem (z.B. einem Sammelschienensystem) jeweils ein bezüglich einer Symmetrieebene spiegelsymmetrisch angeordnetes korrespondierendes Leitersystem gibt, wobei die zwei Leitersysteme mit einem gleich großen, aber entgegengesetzt gerichteten Strom beaufschlagbar sind. Werden im Betrieb der Schalteinrichtung diese gleich großen, aber entgegengesetzt gerichteten Ströme eingestellt, kompensieren sich die von den beiden Leitersystemen erzeugten Magnetfelder und somit die insgesamt von der Schalteinrichtung erzeugten Magnetfelder.

## Patentansprüche

1. Elektrische Schalteinrichtung (1) für ein Überwasser- oder Unterwasserschiff mit zumindest zwei Sammelschienensystemen (15a, 15b) zur Verteilung elektrischer Energie von Energieerzeugern (11a,11b) zu Energieverbrauchern (14a,14b) des Schiffes und mit Schaltgeräten (4a, 4b, 5a, 5b, 6a, 6b), durch die die Energieerzeuger (11a,11b) bzw. die Energieverbraucher (14a,14b) auf die Sammelschienensysteme (15a, 15b) schaltbar bzw. von den Sammelschienensystemen (15a, 15b) trennbar sind, **dadurch gekennzeichnet, dass** zumindest zwei der Sammelschienensysteme (15a, 15b) derart in der Schalteinrichtung (1) angeordnet und mit Strom (I) beaufschlagbar sind, dass sich die von den zumindest zwei Sammelschienensystemen (15a,15b) erzeugten magnetischen Felder (B15a, B15b) in einem Abstand von der Schalteinrichtung (1) im Wesentlichen gegenseitig kompensieren, wobei die zumindest zwei Sammelschienensysteme (15a, 15b) spiegelsymmetrisch zu einer Symmetrieebene (7) in der Schalteinrichtung (1) angeordnet sind, wobei die zumindest zwei Sammelschienensysteme (15a, 15b) jeweils zwei Metallschienen (15a1, 15a2, 15b1, 15b2) aufweisen, wobei die eine Metallschiene (15a1) des Sammelschienensystems (15a) als Hinleiter (+) und die andere Metallschiene (15a2) als Rückleiter (-) vorgesehen ist, und wobei die zumindest zwei Sammelschienensysteme (15a, 15b) räumlich hintereinander in der Schalteinrichtung (1) angeordnet sind.

2. Elektrische Schalteinrichtung (1) nach Anspruch 1,
wobei zumindest zwei der Schaltgeräte (4a, 4b) über jeweils ein Verbindungsleitersystem (19a bzw. 19b) mit einem der zumindest zwei Sammelschienensysteme (15a, 15b) verbunden sind, wobei die Verbindungsleitersysteme (19a, 19b) spiegelsymmetrisch zu einer Symmetrieebene (7) in der Schalteinrichtung (1) angeordnet sind.

3. Elektrische Schalteinrichtung (1) nach Anspruch 2,
wobei zumindest zwei der Schaltgeräte (4a, 4b) über jeweils ein Anschlussleitersystem (16a, bzw. 16b) mit einem der Energieerzeuger (11a, 11b) oder einem der Energieverbraucher (14a, 14b) verbindbar sind, wobei die Anschlussleitersysteme (16a, 16b) spiegelsymmetrisch zu einer Symmetrieebene (7) in der Schalteinrichtung (1) angeordnet sind.

4. Verwendung der elektrischen Schalteinrichtung (1) nach zumindest einem der vorhergehenden Ansprüche in einem Über- oder Unterwasserschiff.

5. Verfahren zum Betreiben einer elektrischen Schalteinrichtung (1) in einem Überwasser- oder Unterwasserschiff mit zumindest zwei Sammelschienensystemen (15a, 15b) zur Verteilung elektrischer Energie von Energieerzeugern (11a,11b) zu Energieverbrauchern (14a,14b) des Schiffes und mit Schaltgeräten(4a, 4b, 5a, 5b, 6a, 6b), durch die die Energieerzeuger (11a,11b) bzw. die Energieverbraucher (14a,14b) auf die Sammelschienensysteme (15a, 15b) schaltbar bzw. von den Sammelschienensystemen (15a, 15b) trennbar sind, **dadurch gekennzeichnet, dass** zumindest zwei der Sammelschienensysteme (15a, 15b) derart mit Strom (I) beaufschlagt werden, dass sich die von dem Strom (I) in den zumindest zwei Sammelschienensystemen (15a, 15b) erzeugten magnetischen Felder (B15a, B15b) in einem Abstand von der Schalteinrichtung (1) im wesentlichen gegenseitig kompensieren, wobei die zumindest zwei Sammelschienensysteme (15a, 15b) spiegelsymmetrisch zu einer Symmetrieebene (7) in der Schalteinrichtung (1) angeordnet sind und mit einem gleich großen aber entgegengesetzt gerichteten Strom (I) beaufschlagt werden, wobei die zumindest zwei Sammelschienensysteme (15a, 15b) jeweils zwei Metallschienen (15a1, 15a2, 15b1, 15b2) aufweisen, wobei die eine Metallschiene (15a1) des Sammelschienensystems (15a) als Hinleiter (+) und die andere Metallschiene (15a2) als Rückleiter (-) dienen, und wobei die zumindest zwei Sammelschienensysteme (15a, 15b) räumlich hintereinander in der Schalteinrichtung angeordnet sind.

6. Verfahren nach Anspruch 5, wobei zumindest zwei der Schaltgeräte (4a, 4b) über jeweils ein Verbindungsleitersystem (19a bzw. 19b) mit einem der zumindest zwei Sammelschienensysteme (15a, 15b) verbunden sind, wobei die Verbindungsleitersysteme (19a, 19b) spiegelsymmetrisch zu einer Symmetrieebene (7) in der Schalteinrichtung (1) angeordnet sind und mit einem gleich großen aber entgegengesetzt gerichteten Strom beaufschlagt werden.

7. Verfahren nach Anspruch 6, wobei zumindest zwei der Schaltgeräte (4a, 4b) über jeweils ein Anschlussleitersystem (16a, bzw. 16b) mit einem der Energieerzeuger (11a,11b) oder einem der Energieverbraucher (14a, 14b) verbunden sind, wobei die Anschlussleitersysteme (16a, 16b) spiegelsymmetrisch zu einer Symmetrieebene (7) in der Schalteinrichtung (1) angeordnet sind und mit einem gleich großen aber entgegengesetzt gerichteten Strom beaufschlagt werden.

## Claims

1. Electrical switching device (1) for a surface vessel or underwater vessel having at least two busbar systems (15a, 15b) for distributing electrical energy from energy producers (11a, 11b) to energy users (14a, 14b) of the vessel and having switching apparatuses (4a, 4b, 5a, 5b, 6a, 6b), by means of which the energy producers (11a, 11b) or the energy users (14a, 14b) can be switched to the busbar systems (15a, 15b) or separated from the busbar systems (15a, 15b), **characterised in that** at least two of the busbar systems (15a, 15b) are arranged in the switching device (1) and current (I) can be applied to them such that the magnetic fields (B15a, B15b) generated by the at least two busbar systems (15a, 15b) at a distance from the switching device (1) substantially mutually compensate one another, wherein the at least two busbar systems (15a, 15b) are arranged in mirror symmetry with a plane of symmetry (7) in the switching device (1), wherein the at least two busbar systems (15a, 15b) each have two metal bars (15a1, 15a2, 15b1, 15b1), wherein one metal bar (15a1) of the busbar system (15a) is provided as a forward conductor (+) and the other metal bar (15a2) is provided as a return conductor (-), and wherein the at least two busbar systems (15a, 15b) are arranged spatially one behind the other in the switching device (1).

2. Electrical switching device (1) according to claim 1, wherein at least two of the switching apparatuses (4a, 4b) are connected to one of the at least two busbar systems (15a, 15b) by way of a connecting conductor system (19a or 19b) in each case, wherein the connecting conductor systems (19a, 19b) are arranged in mirror symmetry with a plane of symmetry (7) in the switching device (1).

3. Electrical switching device (1) according to claim 2, wherein at least two of the switching apparatuses (4a, 4b) can be connected to one of the energy producers (11a, 11b) or one of the energy users (14a, 14b) by way of a line connection system (16a or 16b) in each case, wherein the line connection systems (16a, 16b) are arranged in mirror symmetry with a plane of symmetry (7) in the switching device (1).

4. Use of the electrical switching device (1) according to at least one of the preceding claims in a surface vessel or underwater vessel.

5. Method for operating an electrical switching device (1) in a surface vessel or underwater vessel having at least two busbar systems (15a, 15b) for distributing electrical energy from energy producers (11a, 11b) to energy users (14a, 14b) of the vessel and having switching apparatuses (4a, 4b, 5a, 5b, 6a, 6b), by means of which the energy producers (11a, 11b) or the energy users (14a, 14b) can be switched to the busbar systems (15a, 15b) or can be separated from the busbar systems (15a, 15b), **characterised in that** current (I) is applied to at least two of the busbar systems (15a, 15b) such that the magnetic fields (B15a, B15b) generated in the at least two busbar systems (15a, 15b) by the current (I) at a distance from the switching device (1) substantially mutually compensate one another, wherein the at least two busbar systems (15a, 15b) are arranged in mirror symmetry with a plane of symmetry (7) in the switching device (1) and a current (I) of the same size but with the opposite direction is applied to them, wherein the at least two busbar systems (15a, 15b) each have two metal bars (15a1, 15a2, 15b1, 15b1), wherein one metal bar (15a1) of the busbar system (15a) is provided as a forward conductor (+) and the other metal busbar (15a2) is provided as a return conductor (-), and wherein the at least two busbar systems (15a, 15b) are arranged spatially one behind the other in the switching device.

6. Method according to claim 5, wherein at least two of the switching apparatuses (4a, 4b) are connected to one of the at least two busbar systems (15a, 15b) by way of a connecting conductor system (19a or 19b) in each case, wherein the connecting conductor systems (19a, 19b) are arranged in mirror symmetry with a plane of symmetry (7) in the switching device (1) and a current of the same size but with the opposite direction is applied to them.

7. Method according to claim 6, wherein at least two of the switching apparatuses (4a, 4b) are connected to one of the energy producers (11a, 11b) or one of the energy users (14a, 14b) by way of a line connection system (16a or 16b) in each case, wherein the line connection systems (16a, 16b) are arranged in mirror symmetry with a plane of symmetry (7) in the switching device (1) and a current of the same size but with the opposite direction is applied to them.

## Revendications

1. Dispositif ( 1 ) de commutation électrique pour un bâtiment de navigation sur l'eau ou sous l'eau, comprenant au moins deux systèmes ( 15a, 15b ) de barres collectrices pour répartir de l'énergie électrique de producteurs ( 11a, 11b ) d'énergie à des consommateurs ( 14a, 14b ) d'énergie du bâtiment de navigation et comprenant des appareils ( 4a, 4b, 5a, 5b, 6a, 6b ) de commutation, par lesquels les producteurs ( 11a, 11b ) d'énergie, respectivement les consommateurs ( 14a, 14b ) d'énergie, peuvent être branchés sur les systèmes ( 15a, 15b ) de barres collectrices ou être séparés des systèmes ( 15a, 15b ) de barres collectrices, **caractérisé en ce qu'**au moins deux des systèmes ( 15a, 15b ) de barres collectrices sont disposés dans le dispositif ( 1 ) de commutation et peuvent être alimentés en du courant ( I ) de manière à ce que les champs ( B15a, B15b ) magnétiques produits par les au moins deux systèmes ( 15a, 15b ) de barres collectrices se compensent réciproquement pour l'essentiel à une certaine distance du dispositif ( 1 ) de commutation, les au moins deux systèmes ( 15a, 15b ) de barres collectrices étant symétriques comme un miroir par rapport à un plan ( 7 ) de symétrie du dispositif de commutation, les au moins deux systèmes ( 15a, 15b ) de barres collectrices ayant respectivement deux barres ( 15a1, 15a2, 15b1, 15b2 ) métalliques, l'une des barres ( 15a1 ) métalliques du système ( 15a ) de barres collectrices étant prévue comme conducteur ( + ) allant et l'autre barre ( 15a2 ) métallique comme conducteur ( - ) venant et les au moins deux systèmes ( 15a, 15b ) de barres collectrices étant disposés dans l'espace l'un derrière l'autre dans le dispositif ( 1 ) de commutation.

2. Dispositif ( 1 ) de commutation électrique suivant la revendication 1, dans lequel au moins deux des appareils ( 4a, 4b ) de commutation sont reliés à l'un des au moins deux systèmes ( 15a, 15b ) de barres collectrices par respectivement un système ( 19a et 19b ) de conducteur de liaison, les systèmes ( 19a, 19b ) de conducteur de liaison étant symétriques comme en un miroir par rapport à un plan ( 7 ) de symétrie du dispositif ( 1 ) de commutation.

3. Dispositif ( 1 ) de commutation électrique suivant la revendication 2, dans lequel au moins deux des appareils ( 4a, 4b ) de commutation peuvent être reliés par respectivement un système ( 16a et 16b ) de conducteur de connexion à l'un des producteurs ( 11a, 11b ) d'énergie ou à l'un des consommateurs ( 14a, 14b ) d'énergie, les systèmes ( 16a, 16b ) de conducteur de connexion étant symétriques comme en un miroir par rapport à un plan ( 7 ) de symétrie du dispositif ( 1 ) de commutation.

4. Utilisation du dispositif ( 1 ) de commutation électrique suivant au moins l'une des revendications précédentes dans un bâtiment de navigation sur l'eau ou sous l'eau.

5. Procédé pour faire fonctionner un dispositif ( 1 ) de commutation électrique dans un bâtiment de navigation sur mer ou sous l'eau comprenant au moins deux systèmes ( 15a, 15b ) de barres collectrices pour répartir de l'énergie électrique de producteurs ( 11a, 11b ) d'énergie à des consommateurs ( 14a, 14b ) d'énergie du bâtiment de navigation et comprenant des appareils ( 4a, 4b, 5a, 5b, 6a, 6b ) de commutation par lesquels les producteurs ( 11a, 11b ) d'énergie, respectivement les consommateurs ( 14a, 14b ) d'énergie peuvent être branchés sur les systèmes ( 15a, 15b ) de barres collectrices ou être séparés des systèmes ( 15a, 15b ) de barres collectrices, **caractérisé en ce que** l'on peut alimenter en un courant ( I ) au moins deux des systèmes ( 15a, 15b ) de barres collectrices de manière à ce que les champs ( B15a, B15b ) magnétiques produits par le courant ( I ) dans les au moins deux ( 15a, 15b ) de barres collectrices se compensent pour l'essentiel réciproquement à une certaine distance du dispositif ( 1 ) de commutation, les au moins deux systèmes ( 15a, 15b ) de barres collectrices étant symétriques comme en un miroir par rapport à un plan ( 7 ) de symétrie du dispositif ( 1 ) de commutation et étant alimentés en un courant ( I ) de même intensité mais de sens contraire, les au moins deux systèmes ( 15a, 15b ) de barres collectrices ayant respectivement deux barres ( 151, 15a2, 15b1, 15b2 ) métalliques, l'une des barres ( 15a1 ) métalliques du système ( 15a ) de barres collectrices servant de conducteur ( + ) allant et l'autre barre ( 15a2 ) métallique de conducteur ( - ) venant et les au moins deux systèmes ( 15a, 15b ) de barres collectrices étant disposés l'un derrière l'autre dans l'espace dans le dispositif de commutation.

6. Procédé suivant la revendication 5, dans lequel au moins deux des appareils ( 4a, 4b ) de commutation sont reliés à l'un des au moins deux systèmes ( 15a, 15b ) de barres collectrices par respectivement un système ( 19a et 19b ) de conducteur de liaison, les systèmes ( 19a, 19b ) de conducteur de liaison étant symétriques comme en un miroir par rapport à un plan ( 7 ) de symétrie du dispositif ( 1 ) de commutation et étant alimentés en un courant de même intensité, mais de sens contraire.

7. Procédé suivant la revendication 5, dans lequel au moins deux des appareils ( 4a, 4b ) de commutation peuvent être reliés par respectivement un système ( 16a et 16b ) de conducteur de connexion à l'un des producteurs (11a, 11b ) d'énergie ou à l'un des consommateurs ( 14a, 14b ) d'énergie, les systèmes ( 16a, 16b ) de conducteur de connexion étant symétriques comme en un miroir par rapport à un plan ( 7 ) de symétrie du dispositif ( 1 ) de commutation et étant alimentés en un courant de même intensité mais de sens contraire.
